(19) Europäisches Patentamt European Patent Office Office européen des brevets

(11) **EP 4 787 150 A1**

(12) **EUROPEAN PATENT APPLICATION**
published in accordance with Art. 153(4) EPC

(43) Date of publication:
**05.08.2026 Bulletin 2026/32**

(21) Application number: **24881135.8**

(22) Date of filing: **29.07.2024**

(51) International Patent Classification (IPC):
*G06F 8/41* (2018.01)

(52) Cooperative Patent Classification (CPC):
**G06F 8/41**

(86) International application number:
**PCT/CN2024/108284**

(87) International publication number:
**WO 2025/086764 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.10.2023 CN 202311377535**
**15.11.2023 CN 202311535400**

(71) Applicant: **Huawei Cloud Computing Technologies Co., Ltd.**
**Gui'an New District, Guizhou 550025 (CN)**

(72) Inventors:
• **CHEN, Taihong**
**Guiyang, Guizhou 550025 (CN)**
• **ZHOU, Jianyi**
**Guiyang, Guizhou 550025 (CN)**

(74) Representative: **Isarpatent**
**Patent- und Rechtsanwälte Part G mbB**
**Friedrichstrasse 31**
**80801 München (DE)**

(54) **CODE GENERATION METHOD, APPARATUS, AND COMPUTER-READABLE STORAGE MEDIUM**

(57)    This application provides a code generation method, an apparatus, and a computer-readable storage medium, which may be applied to a code generation system including a cloud computing platform and a terminal device. The method includes: After receiving a code generation request that carries a first question and is sent by the terminal device, the cloud computing platform decomposes the first question to obtain a step of resolving the first question; then, the cloud computing platform searches a code knowledge base based on each step in the step of resolving the first question, to obtain code knowledge matching each step; and finally, the cloud computing platform inputs each step in the step of resolving the first question and the code knowledge matching each step into a code generation model, to obtain code generated by the code generation model, and sends the code to the terminal device, for the terminal device to present the code. In this method, a user only needs to input a code-related question on the terminal device, to view code automatically generated by the system based on the user-input question, thereby helping improve code writing efficiency.

FIG. 3

**Description**

This application claims priorities to Chinese Patent Application No. 202311377535.6, filed with the China National Intellectual Property Administration on October 23, 2023 and entitled "CODE GENERATION METHOD, APPARATUS, AND COMPUTER-READABLE STORAGE MEDIUM", and to Chinese Patent Application No. 202311535400.8, filed with the China National Intellectual Property Administration on November 15, 2023 and entitled "CODE GENERATION METHOD, APPARATUS, AND COMPUTER-READABLE STORAGE MEDIUM", both of which are incorporated herein by reference in their entireties.

**TECHNICAL FIELD**

This application relates to the field of computer technologies, and in particular, to a code generation method, an apparatus, and a computer-readable storage medium.

**BACKGROUND**

With development of computer technologies and an increasingly rapid pace of people's work and life, enterprises and developers manually write code to perform program development on terminal devices like personal computers (personal computers, PCs), desktop computers, or notebook computers by using software (for example, an integrated development environment (integrated development environment, IDE)) that provides code writing. This cannot meet the demand of the enterprises and the developers for high efficiency.

Therefore, a method is urgently required to help the developers improve code writing efficiency and help the enterprises improve program development efficiency.

**SUMMARY**

This application provides a code generation method, an apparatus, and a computer-readable storage medium, so that code can be automatically generated based on a question that is in a natural language and that is input by a developer, to help the developer improve code writing efficiency and help an enterprise improve program development efficiency.

According to a first aspect, a code generation method applied to a code generation system is provided, where the code generation system includes a cloud computing platform and a terminal device, and the method includes the following steps: The cloud computing platform receives a code generation request that carries a first question and is sent by the terminal device, and decomposes the first question to obtain a step of resolving the first question; then, the cloud computing platform searches a code knowledge base based on each step in the step of resolving the first question, to obtain target code knowledge, where the target code knowledge includes code knowledge that is in the code knowledge base and that matches each step in the step of resolving the first question; and then, the cloud computing platform inputs the step of resolving the first question and the target code knowledge into a code generation model, uses code output by the code generation model as target code, and sends the target code to the terminal device, for the terminal device to present the target code. The foregoing code generation model is obtained by training, using an artificial intelligence (artificial intelligence, AI) technology, steps of resolving a plurality of known questions, code knowledge matching the steps of resolving the plurality of known questions, and code used to resolve the plurality of known questions, and code used to resolve each known question includes code in code knowledge matching a step of resolving each known question.

It can be learned that, in the foregoing solution, a user only needs to input a code-related question on the terminal device, to view code that is automatically generated by the cloud computing platform based on the user-input question and that is fed back to the terminal device, thereby helping the user improve code writing efficiency, and helping an enterprise improve program development efficiency.

In addition, the cloud computing platform does not simply input the user question into the code generation model to output the code. Instead, the cloud computing platform obtains the step of resolving the user question by decomposing the user question, and after searching the code knowledge base based on each step in the step of resolving the user question to obtain the code knowledge matching each step, the cloud computing platform inputs each step and the code knowledge matching the step into the code generation model to generate the code. Therefore, the code generated in the foregoing solution has high accuracy.

In some possible implementations, the code knowledge base includes a language type to which each piece of code knowledge in the code knowledge base belongs.

The method further includes the following step: The cloud computing platform obtains an expected code language type of a first user, where the first user is a user of the terminal device.

That the cloud computing platform searches the code knowledge base based on each step in the step of resolving the first question, to obtain the target code knowledge, where the target code knowledge includes the code knowledge that matches each step in the step of resolving the first question includes: The cloud computing platform searches the code knowledge base based on each step in the step of resolving the first question and the expected code language type, to obtain the target code knowledge, where the target code knowledge includes the code knowledge that is in the code knowledge base, belongs to a same language type as the expected code language type, and matches each step in the step of resolving the first question.

In the foregoing implementation, the code knowledge base includes the language type to which each piece of code knowledge in the code knowledge base belongs, and the cloud computing platform obtains the expected code language type of the user, and searches the code knowledge base based on the step of resolving the question and the expected code language type for knowledge recommendation, so that code knowledge matching each step is more fine-grained. Therefore, a granularity of the code generated by the code generation model is also refined to an expected code language field of the user, and the generated code better meets a user requirement, thereby optimizing user experience.

In some possible implementations, the method further includes the following steps: The cloud computing platform obtains information about the first user, queries a first correspondence based on the information about the first user, and uses, as a target prompt template, a prompt template that corresponds to the information about the first user and that is in a plurality of prompt (prompt) templates, where the first correspondence indicates a correspondence between a plurality of pieces of user information and the plurality of prompt templates, the first user is the user of the terminal device, and the first user belongs to a plurality of users.

That the cloud computing platform inputs the step of resolving the first question and the target code knowledge into the code generation model includes: The cloud computing platform fills the step of resolving the first question and the target code knowledge into the target prompt template, and then inputs the target prompt template into the code generation model.

The prompt template has functions of helping the model better understand a user intent, generating a reply that better meets the user requirement, and improving reply quality of the model. Therefore, in the foregoing implementation, after filling the step of resolving the first question and the target code knowledge into the prompt template corresponding to the user information, the cloud computing platform inputs the prompt template into the code generation model to generate code, where the code better meets the user requirement, and code quality is higher.

In some possible implementations, the method further includes the following step: The cloud computing platform receives an update request that is for the code knowledge base and that is sent by the terminal device, and then updates the code knowledge base based on the update request.

It may be understood that, with rapid development of computer technologies over time, new code knowledge and outdated code knowledge emerge in each language field. If the code generation model is not updated, the code generation model may face decreased inference accuracy due to insufficient/outdated training data. Conversely, retraining the code generation model involves long training cycles and high costs. By implementing the foregoing implementation, because the code knowledge in the code knowledge base has been updated, subsequently, when the cloud computing platform receives a new user question and generates code based on the new user question, the cloud computing platform may perform searching in the updated code knowledge base based on the new user question. Since matched code knowledge obtained through searching has been updated, the code generation model may generate code based on the updated code knowledge. This helps maintain timeliness, adaptability, and accuracy of the model.

In some possible implementations, the update request carries new code knowledge.

That the cloud computing platform updates the code knowledge base based on the update request includes: The cloud computing platform adds the new code knowledge carried in the update request to the code knowledge base.

In some possible implementations, the language type to which the code knowledge in the code knowledge base belongs includes any one or more of the following: C, C++, C#, Java, Python, JavaScript, Visual Basic, and Golang.

In some possible implementations, an IDE is installed on the terminal device, and the code generation request is generated based on the first question after the IDE on the terminal device receives the first question, and is sent to the cloud computing platform.

According to a second aspect, a code generation apparatus is provided, used in a cloud computing platform, where the cloud computing platform belongs to a code generation system, the code generation system further includes a terminal device, and the apparatus includes:

an obtaining module, configured to receive a code generation request that carries a first question and is sent by the terminal device;
a question decomposition module, configured to decompose the first question to obtain a step of resolving the first question;
a knowledge search module, configured to search a code knowledge base based on each step in the step of resolving the first question, to obtain target code knowledge, where the target code knowledge includes code knowledge that is in the code knowledge base and that matches each step in the step of resolving the first question;

a code generation module, configured to: input the step of resolving the first question and the target code knowledge into a code generation model, and use code output by the code generation model as target code, where the code generation model is obtained by training, using an artificial intelligence AI technology, steps of resolving a plurality of known questions, code knowledge matching the steps of resolving the plurality of known questions, and code used to resolve the plurality of known questions, and code used to resolve each known question includes code in code knowledge matching a step of resolving each known question; and

a sending module, configured to send the target code to the terminal device.

In some possible implementations, the code knowledge base includes a language type to which each piece of code knowledge in the code knowledge base belongs.

The obtaining module is further configured to obtain an expected code language type of a first user, where the first user is a user of the terminal device.

The knowledge search module is configured to search the code knowledge base based on each step in the step of resolving the first question and the expected code language type, to obtain the target code knowledge, where the target code knowledge includes the code knowledge that is in the code knowledge base, belongs to a same language type as the expected code language type, and matches each step in the step of resolving the first question.

In some possible implementations, the obtaining module is further configured to: obtain information about the first user, query a first correspondence based on the information about the first user, and use, as a target prompt template, a prompt template that corresponds to the information about the first user and that is in a plurality of prompt templates, where the first correspondence indicates a correspondence between a plurality of pieces of user information and the plurality of prompt templates, the first user is the user of the terminal device, and the first user belongs to the plurality of users; and the code generation module is specifically configured to:

fill the step of resolving the first question and the target code knowledge into the target prompt template; and

input the target prompt template into the code generation model.

In some possible implementations, the apparatus further includes a knowledge update module.

The obtaining module is further configured to receive an update request that is for the code knowledge base and that is sent by the terminal device.

The knowledge update module is configured to update the code knowledge base based on the update request.

In some possible implementations, the update request carries new code knowledge.

The knowledge update module is configured to add the new code knowledge carried in the update request to the code knowledge base.

In some possible implementations, the language type to which the code knowledge in the code knowledge base belongs includes any one or more of the following: C, C++, C#, Java, Python, JavaScript, Visual Basic, and Golang.

In some possible implementations, an IDE is installed on the terminal device, and the code generation request is generated based on the first question after the IDE on the terminal device receives the first question, and is sent to the obtaining module.

According to a third aspect, a compute device cluster is provided. The compute device cluster includes a processor and a memory, and the processor is configured to execute instructions stored in the memory, to cause the compute device cluster to implement the method provided in any one of the first aspect or the possible implementations of the first aspect.

According to a fourth aspect, a computer-readable storage medium is provided. The computer-readable storage medium stores instructions, and the instructions are used to implement the method provided in any one of the first aspect or the possible implementations of the first aspect.

According to a fifth aspect, a computer program product is provided, including a computer program. When the computer program is read and executed by a compute device cluster, the compute device cluster is caused to perform the method provided in any one of the first aspect or the possible implementations of the first aspect.

## BRIEF DESCRIPTION OF DRAWINGS

FIG. 1 is a diagram of a structure of a code generation system according to an embodiment of this application;
FIG. 2 is a diagram of providing a code generation cloud service for a user by a code generation system according to an embodiment of this application;
FIG. 3 is a schematic flowchart of a code generation method according to an embodiment of this application;
FIG. 4A is a diagram of a training and inference process of a question step decomposition model according to an embodiment of this application;

FIG. 4B is a diagram of a training and inference process of a code generation model according to an embodiment of this application;

FIG. 5 is a schematic flowchart of another code generation method according to an embodiment of this application;

FIG. 6 is a schematic flowchart of another code generation method according to an embodiment of this application;

FIG. 7 is a diagram of an example of a prompt template according to an embodiment of this application;

FIG. 8 is a schematic flowchart of another code generation method according to an embodiment of this application;

FIG. 9 is a diagram of an example of a prompt template into which steps of resolving a question and target code knowledge are filled according to an embodiment of this application;

FIG. 10 is a diagram of a structure of a code generation apparatus according to an embodiment of this application;

FIG. 11 is a diagram of a structure of a compute device according to an embodiment of this application;

FIG. 12 is a diagram of a structure of a compute device cluster according to an embodiment of this application; and

FIG. 13 is a diagram of a structure of another compute device cluster according to an embodiment of this application.

## DESCRIPTION OF EMBODIMENTS

The following describes technical solutions of this application with reference to the accompanying drawings.

With development of computer technologies and an increasingly rapid pace of people's work and life, enterprises and developers manually write code to perform program development on terminal devices like personal computers (personal computers, PCs), desktop computers, or notebook computers by using software (for example, an IDE) that has a code writing function on the terminal devices. This cannot meet pursuit of the enterprises and the developers for high efficiency.

Therefore, this application provides a code generation system, a code generation method, and the like. In the code generation system and the code generation method provided in this application, a user (for example, a developer) only needs to input a code-related question on a terminal device, to view code automatically generated by the code generation system based on the user-input question, thereby helping the user improve code writing efficiency, and helping the enterprise improve program development efficiency. In addition, the generated code has high accuracy.

The following separately describes in detail the code generation system, the code generation method, and the like provided in this application with reference to the corresponding accompanying drawings.

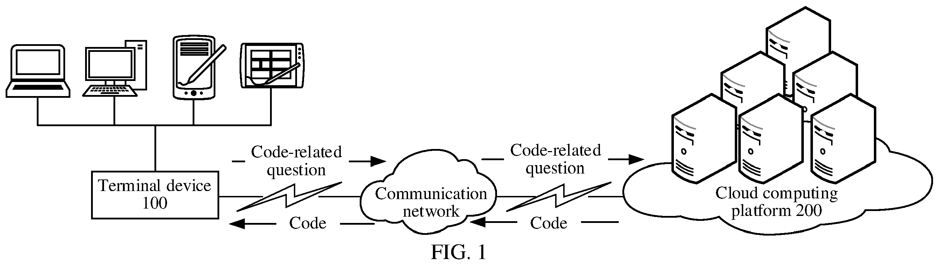

FIG. 1 is a diagram of a structure of a code generation system according to an embodiment of this application. As shown in FIG. 1, the system includes a terminal device 100 and a cloud computing platform 200. The terminal device 100 may communicate with the cloud computing platform 200 via a communication network of any communication mechanism/communication standard. The communication network may be in a form of a wide area network, a local area network, a point-to-point connection, or the like, or any combination thereof.

A user may operate the terminal device 100 to submit a code-related question to the cloud computing platform 200. The cloud computing platform 200 generates code based on the code-related question submitted by the user, and returns the generated code to the terminal device 100, and the terminal device 100 presents the generated code to the user.

During specific implementation, the terminal device 100 may be any compute device, for example, a personal computer, a tablet, a mobile notebook computer, a smartphone, a palmtop processing device, a virtual reality device, a wearable device, an integrated handheld computer, a personal computer, or a computer workstation. This is not specifically limited in this application.

The cloud computing platform 200 may include one or more compute devices. The compute device may be a personal computer, a general-purpose physical server, for example, an X86 server or an ARM server, or may be a virtual machine (virtual machine, VM), a container, or the like. This is not specifically limited in this application. The virtual machine refers to a complete computer system that is implemented by using a network functions virtualization (network functions virtualization, NFV) technology, has a complete hardware system function, and runs in a completely isolated environment. The container refers to a group of processes that are isolated from each other due to resource limitation.

The cloud computing platform 200 may be a central cloud data center of a cloud service provider, or may be an edge data center provided by the cloud service provider for the user.

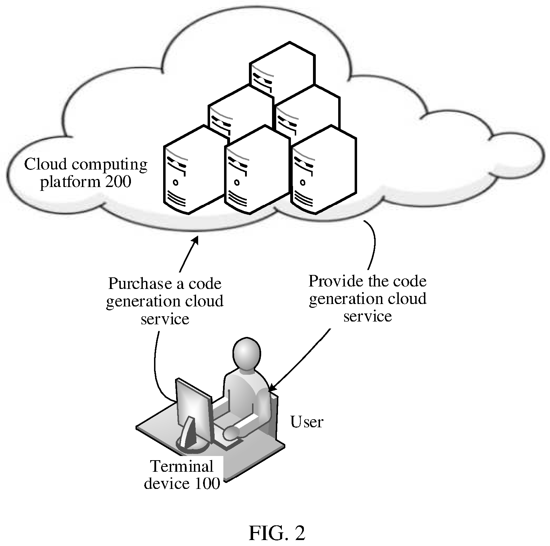

In some possible implementations, the cloud service provider may use a code generation service, which is provided by the cloud computing platform 200, as a cloud service. As shown in FIG. 2, a user may interact with the cloud computing platform 200 via the terminal device 100, and purchase a code generation cloud service. After the user purchases the cloud service, a user who has registered an account with the cloud computing platform 200 may use the cloud service to perform code generation. For example, the cloud computing platform 200 may provide a graphical user interface (graphical user interface, GUI for short) for the user who purchases the cloud service, display the graphical user interface on the terminal device 100 of the user, and enable the user to perform code generation on the graphical user interface. A manner of purchasing the code generation cloud service may include: pre-charging with subsequent settlement based on final actual usage of a resource, or settlement based on usage time of the cloud service or based on a function or a resource included in the purchased cloud service.

In some other possible implementations, all functions of the foregoing code generation system may alternatively be implemented by the terminal device 100. For example, the terminal device 100 implements the code generation service to generate code for the user of the terminal device 100, or the terminal device 100 implements the code generation service to generate code for a user operating another terminal device.

It should be understood that the code generation system shown in FIG. 1 is merely an example. For example, during actual application, the code generation system may include any quantity of terminal devices 100 and any quantity of cloud computing platforms 200, and the code generation system may further include other or more components, for example, a network device configured to forward communication data between the cloud computing platform 200 and the terminal device 100. FIG. 1 should not be considered as a specific limitation.

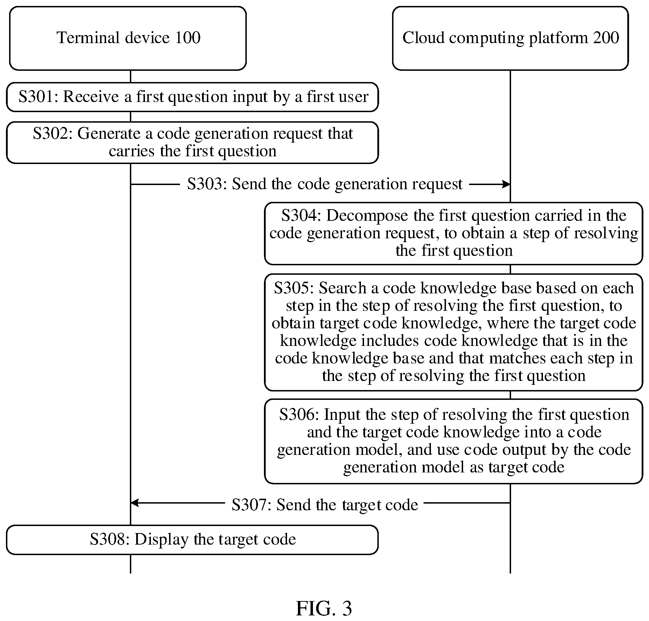

To facilitate a clearer understanding of a specific process of generating the code based on the user question by the code generation system shown in FIG. 1, the following describes in detail with reference to schematic flowcharts of several code generation methods shown in FIG. 3, FIG. 5, FIG. 6, and FIG. 8. It should be noted that in FIG. 3, FIG. 5, FIG. 6, and FIG. 8, an example in which the terminal device 100 and the cloud computing platform 200 implement the code generation service in collaboration is used for description. When the code generation service is independently implemented by the terminal device 100, there is only a need to delete steps of interaction between the terminal device 100 and the cloud computing platform 200 in the code generation methods shown in FIG. 3, FIG. 5, FIG. 6, and FIG. 8, and perform steps that are originally performed by the cloud computing platform 200 by the terminal device 100. For brevity of the specification, details are not described again.

As shown in FIG. 3, the method includes the following steps:

S301: The terminal device 100 receives a first question input by a first user.

S302: The terminal device 100 generates a code generation request that carries the first question.

S303: The terminal device 100 sends the code generation request to the cloud computing platform 200, and correspondingly, the cloud computing platform 200 receives the code generation request that carries the first question and is sent by the terminal device 100.

S304: The cloud computing platform 200 decomposes the first question carried in the code generation request, to obtain a step of resolving the first question.

S305: The cloud computing platform 200 searches a code knowledge base based on each step in the step of resolving the first question, to obtain target code knowledge, where the target code knowledge includes code knowledge that is in the code knowledge base and that matches each step in the step of resolving the first question.

S306: The cloud computing platform 200 inputs the step of resolving the first question and the target code knowledge into a code generation model, and uses code output by the code generation model as target code.

S307: The cloud computing platform 200 sends the target code to the terminal device 100.

S308: The terminal device 100 displays the target code.

The following describes the steps shown in FIG. 3 in detail.

In S301, the first user refers to a user of the terminal device 100, and the first question refers to a related question used to generate the code, for example, "write a piece of crawler software that accesses professional papers in a large-model direction on a paper platform A at fixed time every morning and automatically generates paper abstracts", or "help me complete code, and recommend some code that has a function and structure similar to those of sample code B", or "convert the sample code B from the C language into the Java language and the C++ language". It should be understood that the foregoing examples are used for description, and the first question is not specifically limited in this application.

Specifically, the first question may be a question described in a natural language, and the first user may input the first question via a code generation application client that is on the terminal device 100. Optionally, the first user may also input voice data including the first question via the code generation application client, and the code generation client extracts the first question from the voice data.

The code generation application client may be a piece of standalone software on the terminal device 100, or may be integrated into existing software on the terminal device 100, for example, integrated, in a form of a plug-in, into software (for example, an IDE) that provides a code writing function on the terminal device 100, or run in a browser on the terminal device 100, for example, as a web page that can interact with the first user in the browser. This is not specifically limited in this application.

In a possible embodiment, the code generation application client may present a plurality of code-related questions to the first user, and the first user may select one or more questions from the plurality of presented code-related questions as the first question input into the terminal device 100.

In S302, after receiving the first question input by the first user, the terminal device 100 may further receive an operation that is for code generation and that is performed by the first user on the terminal device 100, and then process the operation as the code generation request carrying the first question. For example, a "Generate code" button, a "Confirm" button, or the like is further displayed on an interface that is displayed on the terminal device 100 for the first user to input the first question. After inputting the first question on the interface, the first user may click or touch the "Generate code" button, the "Confirm" button, or the like on the interface, so as to input the operation used for code generation into the terminal device 100.

Specifically, the first user may input, via the code generation application client that is on the terminal device 100, the operation used for code generation. After receiving the operation of the first user, the code generation application client processes the operation as the code generation request.

In S303, the terminal device 100 may send, via the code generation application client, the code generation request carrying the first question to a code generation server of the cloud computing platform 200. The code generation application server may be a piece of standalone software on the cloud computing platform 200, or may be integrated into existing software on the cloud computing platform 200, or may run in a browser on the cloud computing platform 200. This is not specifically limited in this application.

In S304, the first question "write a piece of crawler software that accesses professional papers in a large-model direction on a paper platform A at fixed time every morning and automatically generates paper abstracts" in S301 is used as an example, and resolution steps obtained by decomposing the first question may be: S1: Install a crawler software dependency program library; S2: Configure a keyword search interface; S3: Configure a crawler interface; S4: Obtain an interface of paper data on the paper platform A; S5: Configure an abstract generation function; and S6: Configure a scheduled service interface to crawl a paper list at the fixed time every day. As an example, for the first question "help me complete code, and recommend some code that has a function and structure similar to those of sample code B" in S301, resolution steps obtained by decomposing the first question may be: S1: Configure a code completion interface; and S2: Configure a code recommendation interface. It should be understood that the foregoing steps of resolving the first question are merely used as examples, and should not be considered as a specific limitation.

In a possible embodiment, the cloud computing platform 200 may input the first question into a question step decomposition model, and use a resolution step, which is output by the question step decomposition model, as the step of resolving the first question, where the question step decomposition model may be represented as:

$$y_1 = f_1(x_1)$$

$y_1$ is the step of resolving the first question, $x_1$ is the first question, and $f_1()$ is a mapping relationship between the step of resolving the first question and the first question.

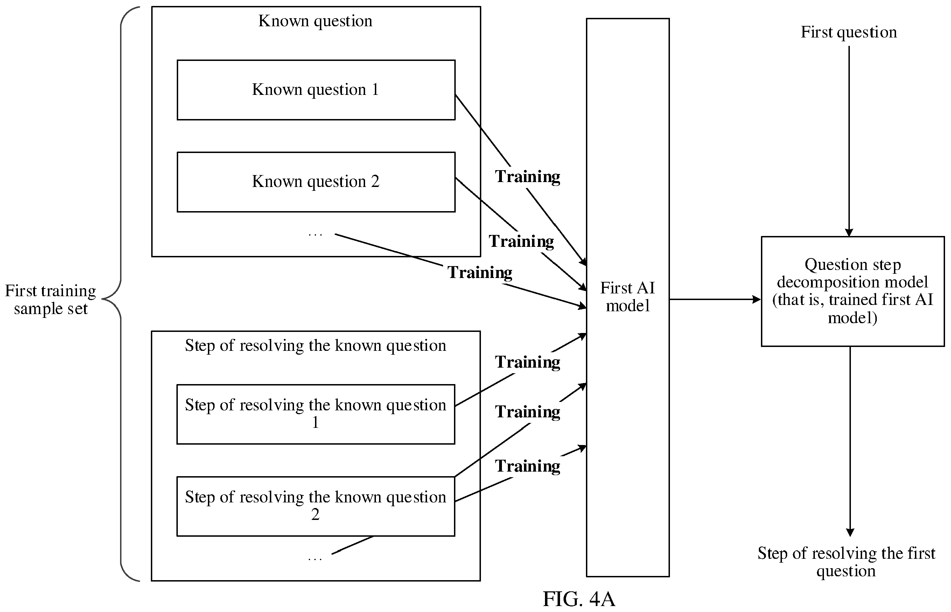

As shown in FIG. 4A, the question step decomposition model may be obtained by training a first AI model by using a first training sample set including a large quantity of known questions and steps of resolving the large quantity of known questions. After the question step decomposition model is obtained through training, the cloud computing platform 200 may decompose the first question by using the question step decomposition model, to obtain the step of resolving the first question. The first AI model may include but is not limited to a decision tree (decision tree), a support vector machine (support vector machine, SVM), and a deep learning model like a generative pre-trained (generative pre-trained transformer, GPT) model. This is not specifically limited in this application. The large quantity of known questions may be historical questions accumulated in one or more language fields (such as C, C++, C#, Java, Python, JavaScript, Visual Basic, and Golang). This is not specifically limited in this application.

Further, a manner of training the first AI model by using the first training sample set to obtain the question step decomposition model may be:

using an $i^{th}$ known question in the first training sample set as an input data sample $S_i$, and using a step of resolving the $i^{th}$ known question as an output data sample $W_i$, where a large quantity of input data samples and a large quantity of output data samples may be obtained by using the foregoing combination, and there is a one-to-one correspondence between the large quantity of input data samples and the large quantity of output data samples.

After the large quantity of input data samples and the large quantity of output data samples are obtained, the large quantity of input data samples may be sequentially used as inputs of the first AI model, an output data sample corresponding to each input data sample is used as a reference for an output value of the first AI model, a loss value between the output value of the first AI model and the data output sample is calculated by using a loss function, and then a parameter of the first AI model is adjusted based on the loss value. During specific implementation, the first AI model may be iteratively trained by using the large quantity of input data samples and the large quantity of output data samples, to continuously adjust the parameter of the first AI model until the first AI model can accurately output, based on an input data sample that is input, an output value that is the same as an output data sample corresponding to the input data sample, to obtain a trained question step decomposition model.

It should be understood that the foregoing process of obtaining the question step decomposition model through training is merely an example, and should not be considered as a specific limitation. For example, during specific implementation, training samples in the first training sample set may be first classified, for example, into the C language field question, a C++ language field question, a Java language field question, and the like based on language fields to which the large quantity of known questions belong, and then the first AI model is trained by using a multi-task learning (multi-task learning, MTL) method, to obtain the question step decomposition model that can implement separate decomposition of multi-language field questions and can implement decomposition of a mixed language field question. The mixed language field question refers to a question combining questions in a plurality of different language fields. For example, a question 1 "convert sample code B into the C language" is a C language field question, a question 2 "convert sample code B into the Java language" is a Java language field question, and a question 3 in which the question 1 and the question 2 are mixed is "convert sample code B into the C language and the Java language".

Optionally, the cloud computing platform 200 may store a step having a large amount of text description. After receiving the first question, the cloud computing platform 200 may extract a keyword from the first question, then query the step having the large amount of text description based on the extracted keyword, and use a step including the keyword as the step of resolving the first question. The first question "help me complete code, and recommend some code that has a function and structure similar to those of sample code B" in S301 is used as an example. In this case, the cloud computing platform 200 may extract the following keywords "complete code" and "recommend code" from the first question, and then perform step matching based on the extracted keywords "complete code" and "recommend code". Optionally, the cloud computing platform 200 may further store a large quantity of questions, a step of resolving each question in the large quantity of questions, and a correspondence between each question and the step of resolving each question. After receiving the first question, the cloud computing platform 200 may perform query based on the first question, to obtain the corresponding step of resolving the first question. An implementation in which the cloud computing platform 200 obtains the step of resolving the first question is not limited in this application.

In S305, the code knowledge base may be stored on the cloud computing platform 200 in a form of a data table, an array, or the like. The code knowledge base includes a large amount of code knowledge, and each piece of code knowledge includes code (for example, a program library, an interface, or a function) and a function description of the code. For example, a function description of an interface "paper_key_word" is an interface used to search for a keyword. For example, a function description of an interface "def crawl _papers (search_query)" is an interface used to implement a crawler function. For example, a function description of a function "add" is a function used to implement an addition function. The large amount of code knowledge may include code knowledge in a plurality of language fields, and the code knowledge in the code knowledge base may be knowledge classified based on the language fields. This is not specifically limited in this application.

The code knowledge that is in the code knowledge base and that matches each step in the step of resolving the first question may be code knowledge that is in the code knowledge base and that has a highest matching degree with each step in the step of resolving the first question. Specifically, a similarity (which may also be referred to as a matching degree) between each step and a function description in each piece of code knowledge in the code knowledge base may be calculated according to a similarity algorithm, so as to obtain the code knowledge that has the highest matching degree with each step. After the code knowledge that has the highest matching degree with each step is obtained, the target code knowledge may be obtained based on a combination of a plurality of pieces of code knowledge that have a highest step matching degree. The similarity algorithm may include but is not limited to a Euclidean distance (Euclidean distance) algorithm, a Pearson correlation coefficient (Pearson correlation coefficient) algorithm, a cosine similarity (cosine similarity) algorithm, a term frequency-inverse document frequency (term frequency-inverse document frequency, TF-IDF) index, and the like. This is not specifically limited in this application.

In an example in which in S304, the first question is "write a piece of crawler software that accesses professional papers in a large-model direction on a paper platform A at fixed time every morning and automatically generates paper abstracts", and the steps of resolving the first question are "S1: Install a crawler software dependency program library; S2: Configure a keyword search interface; S3: Configure a crawler interface; S4: Configure an interface for obtaining paper data from the paper platform A; S5: Configure an abstract generation function; and S6: Configure a scheduled service interface to crawl a paper list at the fixed time every day", the cloud computing platform 200 searches the code knowledge base separately based on the foregoing six steps, and may obtain the code knowledge that matches each step.

The following is examples of the matched code knowledge by using S1 "Install a crawler software dependency program library" as an example: import requests, from bs4, import BeautifulSoup, and import openai, where import requests, from bs4, import BeautifulSoup, and import openai are all crawler software dependency program libraries. The following is examples of the matched code knowledge by using S2 "Configure a keyword search interface" as an example: paper_title, paper_abstract, paper_text, and paper_key_word, where paper_title is an interface for searching for a keyword in a paper title, paper_abstract is an interface for searching for the keyword in a paper abstract, paper_text is an interface for searching for the keyword in a paper body, and paper_key_word is an interface for searching for the keyword. It should be understood that the foregoing steps of resolving the first question and the examples of the code knowledge matching the steps of resolving the first question are merely examples, and should not be considered as specific limitations.

In S306, the code generation model may be represented as:

$$y_2 = f_2(x_2)$$

$y_2$ is the code generated based on the step of resolving the first question and the target code knowledge, $x_2$ is the step of resolving the first question and the target code knowledge, and $f_2()$ is a mapping relationship between the step of resolving the first question and the target code knowledge, and the code.

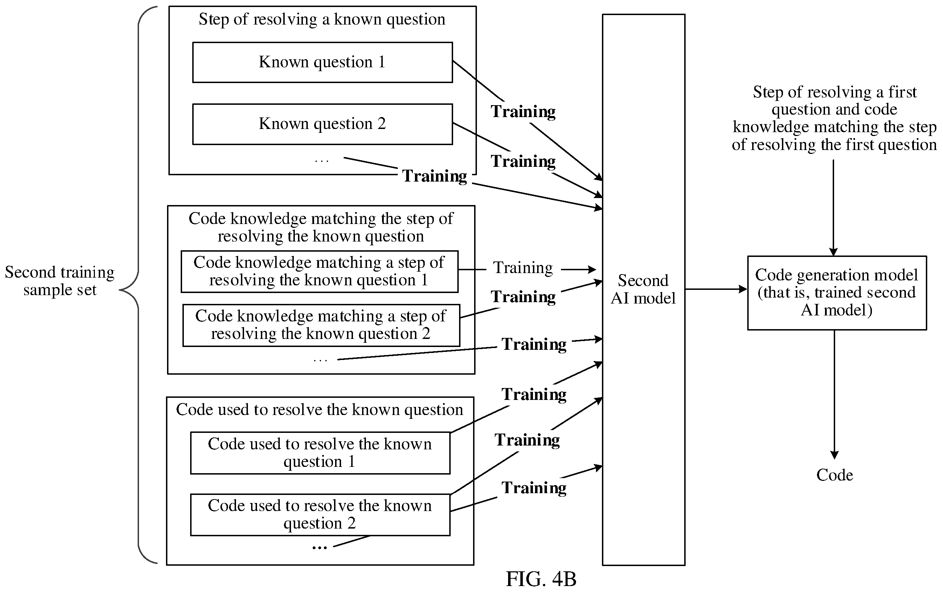

As shown in FIG. 4B, a code generation model may be obtained by training a second AI model by using a second training sample set including a step of resolving a large quantity of known questions, code knowledge matching the step of resolving the large quantity of known questions, and code used to resolve the large quantity of known questions. After the code generation model is obtained through training, the cloud computing platform 200 may use the code generation model to perform inference on the step of resolving the first question and the target code knowledge, to obtain the code used to resolve the first question. The step of resolving the large quantity of known questions in the second training sample set may be the step of resolving the large quantity of known questions in the first training sample set. Code used to resolve each known question includes code knowledge matching a step of resolving each known question. In other words, the code used to resolve each known question is obtained by writing based on the code knowledge matching the step of resolving each known question. The second AI model may include but is not limited to a decision tree, a support vector machine, and a deep learning model like a GPT model. This is not specifically limited in this application.

In a possible embodiment, the second AI model and the first AI model may be a same model. For example, both are GPT models.

Further, a manner of training the second AI model by using the second training sample set to obtain the code generation model may be:

A step of resolving an $i^{th}$ known question in the second training sample set and code knowledge matching the step of resolving the $i^{th}$ known question are used as an input data sample $S_i$, and code used to resolve the $i^{th}$ known question is used as an output data sample $W_i$, where a large quantity of input data samples and a large quantity of output data samples may be obtained by using the foregoing combination, and there is a one-to-one correspondence between the large quantity of input data samples and the large quantity of output data samples.

After the large quantity of input data samples and the large quantity of output data samples are obtained, the large quantity of input data samples may be sequentially used as inputs of the second AI model, an output data sample corresponding to each input data sample is used as a reference for an output value of the second AI model, a loss value between the output value of the second AI model and the data output sample is calculated by using a loss function, and then a parameter of the second AI model is adjusted based on the loss value. During specific implementation, the second AI model may be iteratively trained by using the large quantity of input data samples and the large quantity of output data samples, to continuously adjust the parameter of the second AI model until the second AI model can accurately output, based on an input data sample that is input, an output value that is the same as an output data sample corresponding to the input data sample, to obtain a trained question step decomposition model.

It should be understood that the foregoing process of obtaining the code generation model through training is merely an example, and should not be considered as a specific limitation.

In S307, the cloud computing platform 200 may send, via the code generation application server, the target code to the code generation application client that is on the terminal device 100.

In S308, the code generation application client on the terminal device 100 may display the target code for the first user to view.

It can be learned that, in the embodiment shown in FIG. 3, the user only needs to input a code-related question on the terminal device 100, to view code that is automatically generated by the code generation system based on the user-input question, thereby helping the user improve code writing efficiency, and helping an enterprise improve program development efficiency.

In addition, the cloud computing platform 200 does not simply input the user question into the code generation model to output the code. Instead, the cloud computing platform 200 obtains the step of resolving the user question by decomposing the user question, and after searching the code knowledge base based on each step in the step of resolving the user question to obtain the code knowledge matching each step, the cloud computing platform 200 inputs each step and the code knowledge matching the step into the code generation model to generate the code. Therefore, the code generated in the foregoing solution has high accuracy.

In a possible embodiment, in addition to the large amount of code knowledge, the code knowledge base may further include a type of each piece of code knowledge in the large amount of code knowledge, for example, a language type to which each piece of code knowledge belongs, a product line to which each piece of code knowledge belongs, and a department to which each piece of code knowledge belongs. Refer to Table 1 and Table 2. Two code knowledge bases are shown in this application as examples. In Table 1, an example in which the code knowledge base includes the language type to which each piece of code knowledge belongs is used; and in Table 2, an example in which the code knowledge base includes the product line to which each piece of code knowledge belongs is used. It should be understood that language types shown in Table 1 and product line types shown in Table 2 are merely used for description. This is not specifically limited in this application.

Table 1 Code knowledge base

| Code knowledge | Language type of the code knowledge |
| --- | --- |
| Code knowledge 1 | C language |
| Code knowledge 2 | C++ language |
| Code knowledge 3 | Java language |
| ... | ... |

Table 2 Code knowledge base

| Code knowledge | Product line to which the code knowledge belongs |
| --- | --- |
| Code knowledge 1 | Wireless |
| Code knowledge 2 | Data communication |
| Code knowledge 3 | Computing |
| Code knowledge 4 | Cloud core |
| ... | ... |

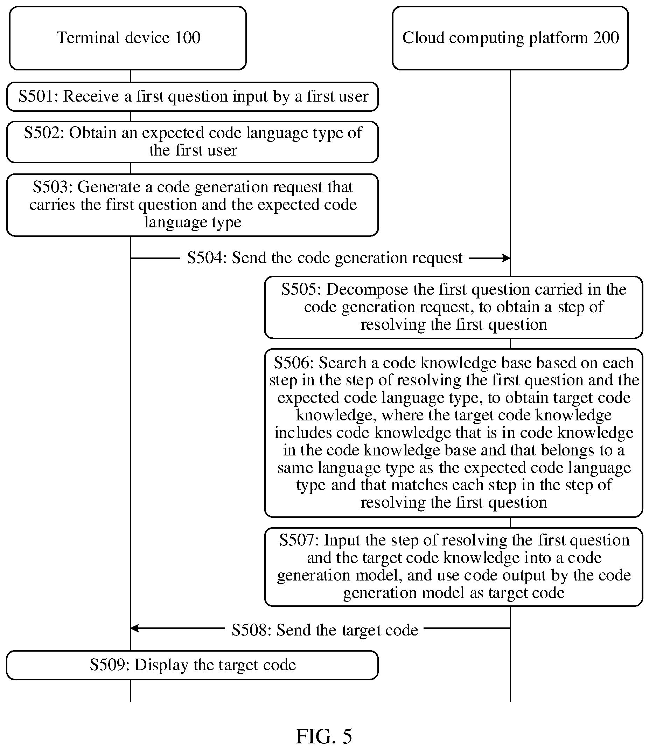

An example in which the code knowledge base includes the large amount of code knowledge and the language type to which each piece of code knowledge belongs is used. For a specific process in which the code generation system shown in FIG. 1 generates the code based on the user question, refer to steps shown in FIG. 5.

S501: A terminal device 100 receives a first question input by a first user.

S502: The terminal device 100 obtains an expected code language type of the first user.

S503: The terminal device 100 generates a code generation request that carries the first question and the expected code language type.

S504: The terminal device 100 sends the code generation request to a cloud computing platform 200, and correspondingly, the cloud computing platform 200 receives the code generation request sent by the terminal device 100.

S505: The cloud computing platform 200 decomposes the first question carried in the code generation request, to obtain a step of resolving the first question.

S506: The cloud computing platform 200 searches a code knowledge base based on each step in the step of resolving the first question and the expected code language type, to obtain target code knowledge, where the target code knowledge includes code knowledge that is in the code knowledge base, belongs to a same language type as the expected code language type, and matches each step in the step of resolving the first question.

S507: The cloud computing platform 200 inputs the step of resolving the first question and the target code knowledge into a code generation model, and uses code output by the code generation model as target code.

S508: The cloud computing platform 200 sends the target code to the terminal device 100.

S509: The terminal device 100 displays the target code.

S501 is the same as S301, a specific implementation process of S503 is similar to a specific implementation process of S302, S504 is the same as S303, S505 is the same as S304, a specific implementation process of S506 is similar to a specific implementation process of S305, S507 is the same as S306, S508 is the same as S307, and S509 is the same as S308. Refer to related descriptions of the corresponding steps shown in FIG. 3. For brevity of the specification, details are not described again.

The following describes in detail the remaining step S502 shown in FIG. 5.

In S502, the expected code language type refers to a language type of code that the first user expects to generate.

A manner in which the terminal device 100 obtains the expected code language type of the first user may be the following Manner 1 or Manner 2:

Manner 1: The expected code language type is input by the first user into the terminal device 100. Specifically, the first user may input the expected code language type via a code generation application client that is on the terminal device 100.

For example, an "Expected language type" input box is further displayed on an interface that is displayed on the terminal device 100 for the first user to input the first question. When inputting the first question on the interface, the first user may input the expected code language type into the "Expected language type" input box. For another example, an "Expected language type" selection box is further displayed on the interface that is displayed on the terminal device 100 for the first user to input the first question, and a language type that can be selected includes but is not limited to C, C++, C#, Java, Python, JavaScript, Visual Basic, and Golang. When inputting the first question on the interface, the first user may select one or more language types in the "Expected language type" selection box as the expected code language type.

Manner 2: The expected code language type is automatically obtained by the terminal device 100, and an automatic obtaining manner may be the following Manner 2.1 or Manner 2.2.

Manner 2.1: If the first user creates a code file on software (for example, an IDE) that has a code writing function on the terminal device 100, and inputs the first question into the opened code file, before generating the code generation request, the terminal device 100 may identify a language type of the code file based on a suffix of the code file to which the first question belongs, and use the language type of the code file as the expected code language type of the first user. For example, when the suffix of the code file is .c, the terminal device 100 identifies that the language type is the C language. For another example, when the suffix of the code file is .java, the terminal device 100 identifies that the language type is the Java language.

Manner 2.2: If the first user creates a code file on software (for example, an IDE) that has a code writing function on the terminal device 100, and writes code in the opened code file and inputs the first question, before generating the code request, the terminal device 100 may identify a language type of the code that has been written by the first user in the code file, and use the language type as the expected code language type of the first user.

It should be understood that the manner in which the terminal device 100 automatically obtains the expected code language type of the first user is merely an example. This is not specifically limited in this application. For example, because some IDEs allow the user to configure a programming environment, including a specified programming language to be used, the terminal device 100 may obtain a programming language preference of the user by analyzing user configuration information of the IDE, and use a programming language type preferred by the user as the expected code language type.

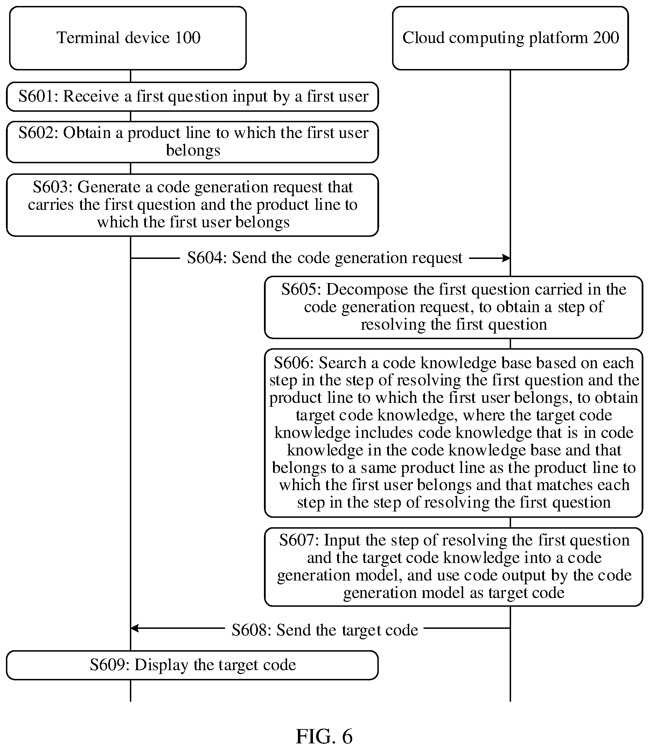

Further, an example in which the code knowledge base includes the large amount of code knowledge and the product line to which each piece of code knowledge belongs is used. For the specific process in which the code generation system shown in FIG. 1 generates the code based on the user question, refer to steps shown in FIG. 6.

S601: A terminal device 100 receives a first question input by a first user.

S602: The terminal device 100 obtains a product line to which the first user belongs.

S603: The terminal device 100 generates a code generation request that carries the first question and the product line to which the first user belongs.

S604: The terminal device 100 sends the code generation request to a cloud computing platform 200, and correspondingly, the cloud computing platform 200 receives the code generation request sent by the terminal device 100.

S605: The cloud computing platform 200 decomposes the first question carried in the code generation request, to obtain a step of resolving the first question.

S606: The cloud computing platform 200 searches a code knowledge base based on each step in the step of resolving the first question and the product line to which the first user belongs, to obtain target code knowledge, where the target code knowledge includes code knowledge that is in the code knowledge base, belongs to a same product line as the product line to which the first user belongs, and matches each step in the step of resolving the first question.

S607: The cloud computing platform 200 inputs the step of resolving the first question and the target code knowledge into a code generation model, and uses code output by the code generation model as target code.

S608: The cloud computing platform 200 sends the target code to the terminal device 100.

S609: The terminal device 100 displays the target code.

S601 is the same as S301, a specific implementation process of S603 is similar to a specific implementation process of S302, a specific implementation process of S604 is similar to a specific implementation process of S303, S605 is the same as S304, a specific implementation process of S606 is similar to a specific implementation process of S305, S607 is the same as S306, S608 is the same as S307, and a specific implementation process of S609 is the same as a specific implementation process of S308. Refer to related descriptions of the corresponding steps shown in FIG. 3. For brevity of the specification, details are not described again.

The following describes in detail the remaining step S602 shown in FIG. 6.

In S602, a manner in which the terminal device 100 obtains the product line to which the first user belongs may be the following Manner (1) or Manner (2):

Manner (1): The product line to which the first user belongs is input by the first user into the terminal device 100. Specifically, the first user may input the product line to which the first user belongs via a code generation application client that is on the terminal device 100.

For example, a "Product line type" input box is further displayed on an interface that is displayed on the terminal device 100 for the first user to input the first question. When inputting the first question on the interface, the first user may input the product line to which the first user belongs into the "Product line type" input box. For another example, a "Product line type" selection box is further displayed on the interface that is displayed on the terminal device 100 for the first user to input the first question, and a product line type that can be selected may include, for example, but is not limited to wireless, data communication, cloud core, and computing. When inputting the first question on the interface, the first user may select one product line type in the "Product line type" selection box as the product line to which the first user belongs.

Manner (2): Registration information filled by the first user when the first user registers with the cloud computing platform 200 may include information about the first user, for example, an identifier (for example, a name, an identity card number, a mobile phone number, and an email address) of the first user, the product line to which the first user belongs, and a department to which the first user belongs. The cloud computing platform 200 stores the registration information. Before generating the code request, the terminal device 100 may send, to the cloud computing platform 200, a product line obtaining request carrying the identifier of the first user, to request to obtain a product line corresponding to the identifier of the first user, where the product line is the product line to which the first user belongs.

It should be understood that a manner in which the terminal device 100 obtains the product line to which the first user belongs is merely used as an example. This is not specifically limited in this application.

Optionally, S602 may be that the terminal device 100 obtains the identifier of the first user, and S603 may be that the terminal device 100 generates a code generation request carrying the first question and the identifier of the first user. After S604 and before S606, the cloud computing platform 200 may query the registration information in Manner (2) based on the identifier of the first user carried in the code generation request, to obtain the product line to which the first user belongs. In other words, the product line to which the first user belongs is not obtained and sent to the cloud computing platform 200 by the terminal device 100, but is obtained by the cloud computing platform 200 by querying the registration information of the first user based on the identifier of the first user sent by the terminal device 100. An implementation in which the cloud computing platform 200 obtains the product line to which the first user belongs is not limited in this application.

It can be learned that, in embodiments shown in FIG. 5 and FIG. 6, in comparison with the embodiment shown in FIG. 3, when code knowledge matching is performed for the step of resolving the question, matched code knowledge is more fine-grained, where the embodiment in FIG. 5 is refined to a specific language field, and the embodiment in FIG. 6 is refined to a specific product line. Therefore, in embodiments shown in FIG. 5 and FIG. 6, the code generation model generates code based on code knowledge that is more fine-grained and that matches the step of resolving the question, so that a granularity of the generated code is also more fine-grained. For example, in the embodiment in FIG. 5, the code generated by the code generation model is refined to an expected code language field of the user; and in the embodiment in FIG. 6, the code generated by the code generation model is refined to the product line to which the user belongs. This better meets a user requirement and further optimizes user experience.

In another possible embodiment, the cloud computing platform 200 may store a plurality of pieces of user information, a plurality of prompt (prompt) templates, and a first correspondence. The first correspondence indicates a correspondence between the plurality of pieces of user information and the plurality of prompt templates. The first user belongs to a plurality of users. The user information may include a user name, an identity card number, a mobile phone number, an email address, a department to which the user belongs, a product line to which the user belongs, a professional field to which the user belongs, and the like. The first correspondence may be stored on the cloud computing platform 200 in a form of a data table, an array, or the like. The prompt template is used, when the code generation model generates code, to help the model better understand a user intent and generate a reply that better meets a user requirement, thereby improving reply quality of the model.

Refer to a first correspondence shown as an example in Table 3 in this application. In Table 3, an example in which the user information is the user name is used.

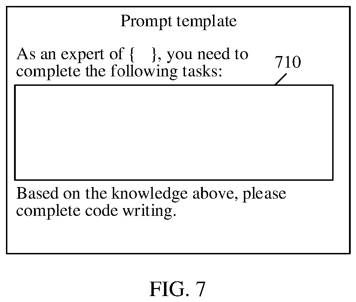

FIG. 7 is a diagram of an example of a prompt template according to this application. The prompt template includes a task filling area 710 used to be filled with a step of resolving a question and code knowledge matching the step of resolving the question. { } in the prompt template is used to be filled with a professional field of a user. For example, when a first question input by a first user includes a keyword "Java", "Java development" is filled into {}; and when a first question input by a first user includes a keyword "C++", "C++" is filled into {}. It should be understood that the prompt template shown in FIG. 7 is merely used for description. This is not specifically limited in this application.

Table 3 First correspondence

| Product line | Prompt template |
|---|---|
| Wireless | Prompt template 1 |
| Data communication | Prompt template 2 |
| Computing | Prompt template 3 |
| Cloud core | Prompt template 4 |

(continued)

| Product line | Prompt template |
|---|---|
| ... | ... |

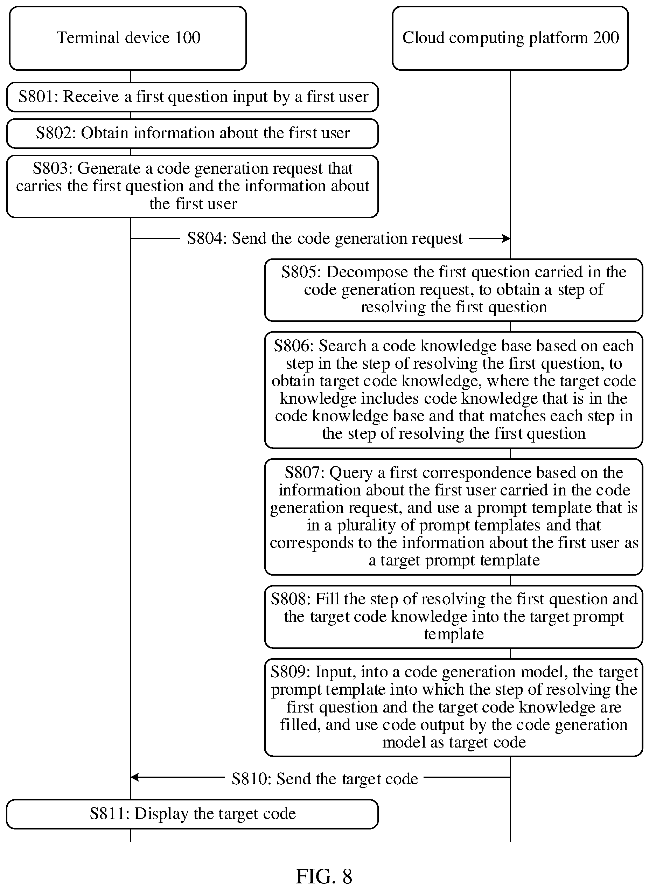

In this embodiment, for the specific process in which the code generation system shown in FIG. 1 generates the code based on the user question, refer to steps shown in FIG. 8.

S801: A terminal device 100 receives a first question input by a first user.

S802: The terminal device 100 obtains information about the first user.

S803: The terminal device 100 generates a code generation request that carries the first question and the information about the first user.

S804: The terminal device 100 sends the code generation request to a cloud computing platform 200, and correspondingly, the cloud computing platform 200 receives the code generation request sent by the terminal device 100.

S805: The cloud computing platform 200 decomposes the first question carried in the code generation request, to obtain a step of resolving the first question.

S806: The cloud computing platform 200 searches a code knowledge base based on each step in the step of resolving the first question, to obtain target code knowledge, where the target code knowledge includes code knowledge that is in the code knowledge base and that matches each step in the step of resolving the first question.

S807: The cloud computing platform 200 queries a first correspondence based on the information about the first user carried in the code generation request, and uses a prompt template that is in a plurality of prompt templates and that corresponds to the information about the first user as a target prompt template.

S808: The cloud computing platform 200 fills the step of resolving the first question and the target code knowledge into the target prompt template.

S809: The cloud computing platform 200 inputs, into a code generation model, the target prompt template into which the step of resolving the first question and the target code knowledge are filled, and uses code output by the code generation model as target code.

S810: The cloud computing platform 200 sends the target code to the terminal device 100.

S811: The terminal device 100 displays the target code.

S801 is the same as S301, a specific implementation process of S803 is similar to a specific implementation process of S302, a specific implementation process of S804 is similar to a specific implementation process of S303, S805 is the same as S304, a specific implementation process of S806 is similar to a specific implementation process of S305, S810 is the same as S307, and a specific implementation process of S811 is the same as a specific implementation process of S308. Refer to related descriptions of the corresponding steps shown in FIG. 3. For brevity of the specification, details are not described again.

The following describes in detail the remaining steps S802, S807, S808, and S809 shown in FIG. 8.

In S802, the information about the first user may be input by the first user into the terminal device 100. Specifically, the first user may input the information about the first user via a code generation application client that is on the terminal device 100.

An example in which user information is a product line to which the user belongs is used. For example, a "Product line type" input box is further displayed on an interface that is displayed on the terminal device 100 for the first user to input the first question. When inputting the first question on the interface, the first user may input the product line to which the first user belongs into the "Product line type" input box. For another example, a "Product line type" selection box is further displayed on the interface that is displayed on the terminal device 100 for the first user to input the first question, and a product line type that can be selected may include, for example, but is not limited to wireless, data communication, cloud core, and computing. When inputting the first question on the interface, the first user may select one product line type in the "Product line type" selection box as the product line to which the first user belongs.

Optionally, S802 may be that the terminal device 100 obtains an identifier of the first user, and S803 may be that the terminal device 100 generates a code generation request carrying the first question and the identifier of the first user. After S804 and before S807, the cloud computing platform 200 may query the registration information in Manner (2) in S602 based on the identifier of the first user carried in the code generation request, to obtain the product line to which the first user belongs. In other words, the product line to which the first user belongs is not obtained and sent to the cloud computing platform 200 by the terminal device 100, but is obtained by the cloud computing platform 200 by querying the registration information of the first user based on the identifier of the first user sent by the terminal device 100. An implementation in which the cloud computing platform 200 obtains the product line to which the first user belongs is not limited in this application.

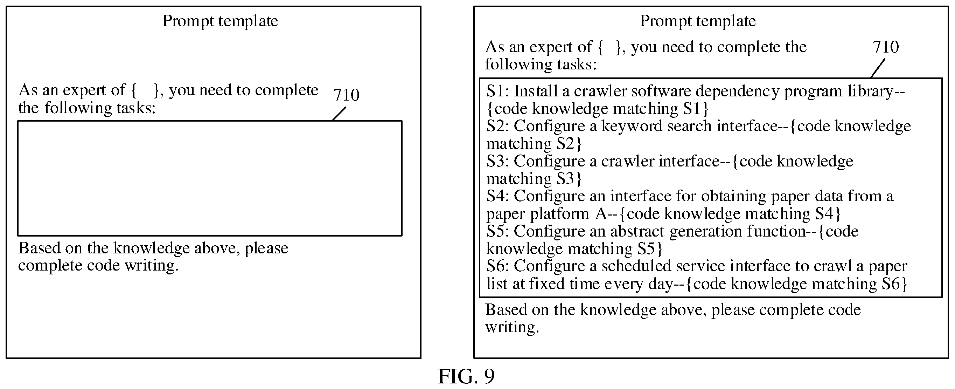

For S807 and S808, refer to prompt templates shown in FIG. 9. The left side of FIG. 9 is a diagram of the prompt template before the step of resolving the first question and the target code knowledge are filled into the prompt template.

For detailed content of the prompt template, refer to related descriptions in FIG. 7. The right side of FIG. 9 is a diagram of the prompt template after the step of resolving the first question and the target code knowledge are filled into the prompt template. It should be understood that FIG. 9 is merely used for description, and this is not specifically limited in this application.

In S809, to implement a case in which the code generation model performs inference to output the code based on the target prompt template into which the step of resolving the first question and the target code knowledge are filled, the second AI model may be trained to obtain the code generation model by using the foregoing second training sample set in the following manner: filling the step of resolving the $i^{th}$ known question in the second training sample set and the code knowledge matching the step of resolving the $i^{th}$ known question into a corresponding prompt template, using the prompt template into which the step of resolving the $i^{th}$ known question and the code knowledge matching the step of resolving the $i^{th}$ known question are filled as an input data sample Si, and using a prompt template into which the step of resolving the $i^{th}$ known question, the code knowledge matching the step of resolving the $i^{th}$ known question, and code used to resolve the $i^{th}$ known question are filled as an output data sample Wi, where a large quantity of input data samples and a large quantity of output data samples may be obtained by using the foregoing combination, and there is a one-to-one correspondence between the large quantity of input data samples and the large quantity of output data samples. Then, the second AI model is trained by using the large quantity of input data samples and the large quantity of output data samples.

The prompt template corresponding to the step of resolving the $i^{th}$ known question and the code knowledge matching the step of resolving the $i^{th}$ known question may be determined in the following manners:

Manner 1: The first correspondence shown in Table 3 is used as an example. In the plurality of prompt templates shown in Table 3, a prompt template corresponding to a product line that is the same as a product line to which the $i^{th}$ known question belongs is the prompt template corresponding to the step of resolving the $i^{th}$ known question and the code knowledge matching the step of resolving the $i^{th}$ known question.

Manner 2: The first correspondence shown in Table 3 is still used as an example. In the plurality of prompt templates shown in Table 3, a prompt template corresponding to a product line that is the same as a product line to which the code knowledge matching the step of resolving the $i^{th}$ known question belongs is the prompt template corresponding to the step of resolving the $i^{th}$ known question and the code knowledge matching the step of resolving the $i^{th}$ known question.

It should be noted that the foregoing Manner 1 and Manner 2 are merely used as examples, and should not be considered as a specific limitation. For example, if the first correspondence indicates a correspondence between departments to which a plurality of users belong and the plurality of prompt templates, a prompt template, in the plurality of prompt templates, corresponding to a department that is the same as a department to which the code knowledge matching the step of resolving the $i^{th}$ known question belongs may be used as the prompt template corresponding to the step of resolving the $i^{th}$ known question and the code knowledge matching the step of resolving the $i^{th}$ known question.

It can be learned that the embodiment in FIG. 8 is an extension of the embodiment shown in FIG. 3. On the basis of the embodiment in FIG. 3, the step of obtaining the information about the first user (that is, S802), the step of querying the first correspondence based on the information about the first user to obtain the target prompt template (that is, S807), and the step of filling the step of resolving the first question and the target code knowledge into the target prompt template (that is, S808) are added, and inputting the step of resolving the first question and the target code knowledge into the code generation model in S306 shown in FIG. 3 is replaced with inputting, into the code generation model, the target prompt template into which the step of resolving the first question and the target code knowledge are filled in S809. The prompt template can help the code generation model better understand a user intent, and generate a reply that better meets a user requirement, thereby improving reply quality of the model. Therefore, in comparison with the embodiment in FIG. 3, in the embodiment in FIG. 8, the cloud computing platform 200 may use the code generation model to generate code that better meets the user requirement, so as to improve code quality.

According to the foregoing approach, it may be understood that, on the basis of embodiments in FIG. 5 and FIG. 6, the step of obtaining the information about the first user, the step of querying the first correspondence based on the information about the first user to obtain the target prompt template, and the step of filling the step of resolving the first question and the target code knowledge into the target prompt template may alternatively be added, and inputting the step of resolving the first question and the target code knowledge into the code generation model in S507/S607 shown in FIG. 5/FIG. 6 is replaced with inputting, into the code generation model, the target prompt template into which the step of resolving the first question and the target code knowledge are filled. The prompt template can help the code generation model better understand the user intent, and generate the reply that better meets the user requirement, thereby improving the reply quality of the model. Therefore, the foregoing operations are performed on the basis of embodiments in FIG. 5 and FIG. 6, in comparison with embodiments in FIG. 5 and FIG. 6, the cloud computing platform 200 may use the code generation model to generate code that better meets the user requirement, so as to improve the code quality.

It should be noted that that the code knowledge base, the plurality of pieces of user information, the plurality of prompt templates, the plurality of language types, the first correspondence, and the like are stored on the cloud computing platform 200 is only used as an example. During specific implementation, the foregoing information may alternatively be stored in one or more other storage devices independent of the cloud computing platform 200. When the cloud computing platform 200 needs to query corresponding information, the cloud computing platform 200 may access a storage device that stores the corresponding information, to perform query.

It may be understood that, with rapid development of computer technologies over time, new and outdated code knowledge emerge in each language field. If the code generation model is not updated, the code generation model may face decreased inference accuracy due to insufficient/outdated training data. Conversely, retraining the code generation model involves long training cycles and high costs. To resolve the foregoing problems, the code generation methods shown in FIG. 3, FIG. 5, FIG. 6, and FIG. 8 provided in embodiments of this application may further include the following steps:

Step 1: The terminal device 100 receives an update operation, input by the first user, for the code knowledge base, for example, an operation of deleting outdated code knowledge in the code knowledge base, an operation of correcting incorrect code knowledge in the code knowledge base, and an operation of adding new code knowledge to the code knowledge base.
Step 2: The terminal device 100 processes the foregoing update operation for the code knowledge base as an update request for the code knowledge base.
Step 3: The terminal device 100 sends the update request to the cloud computing platform 200.
Step 4: The cloud computing platform 200 updates the code knowledge base based on the update request, for example, deletes the outdated code knowledge in the code knowledge base, corrects the incorrect code knowledge in the code knowledge base, or adds the new code knowledge to the code knowledge base.

When the update request is used to request to add the new code knowledge to the code knowledge base, the update request may carry the new code knowledge that needs to be added.

It may be understood that, because the code knowledge in the code knowledge base is updated, subsequently, when the cloud computing platform 200 receives a new user question and generates code based on the new user question, the cloud computing platform 200 may perform searching in the updated code knowledge base based on the new user question. Since matched code knowledge obtained through searching has been updated, the code generation model may generate code based on the updated code knowledge. This helps maintain timeliness, adaptability, and accuracy of the model.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

The foregoing describes in detail the code generation method provided in embodiments of this application. Based on a same inventive concept, the following continues to describe a code generation apparatus and a compute device cluster that are provided in embodiments of this application.

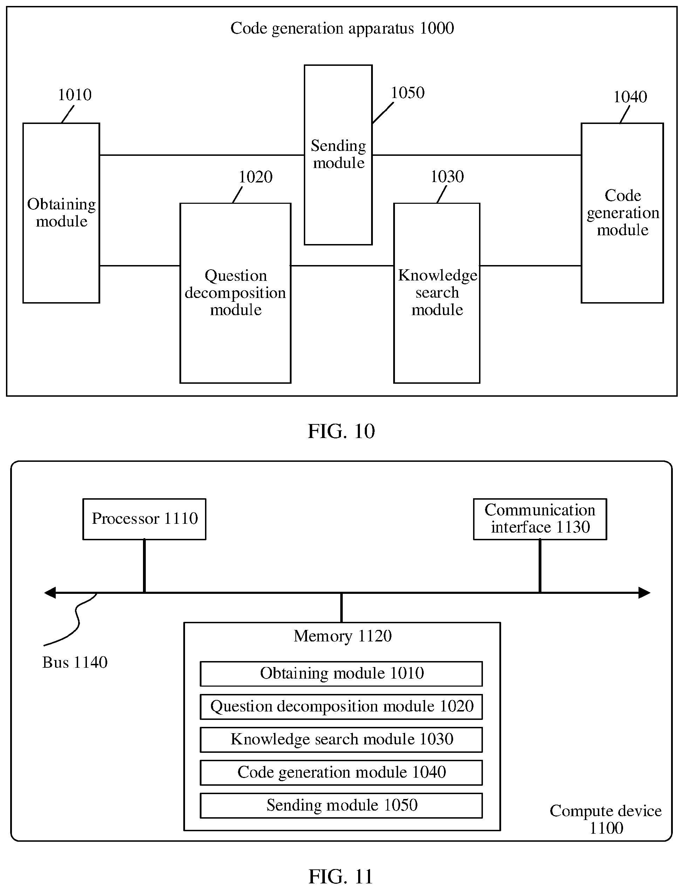

FIG. 10 is a diagram of a structure of a code generation apparatus 1000 according to an embodiment of this application. The code generation apparatus 1000 may be used in the code generation system shown in FIG. 1, and may be specifically used in the compute device on the cloud computing platform 200 shown in FIG. 2.

As shown in FIG. 10, the code generation apparatus 1000 includes an obtaining module 1010, a question decomposition module 1020, a knowledge search module 1030, a code generation module 1040, and a sending module 1050. The following describes functions of the modules of the code generation apparatus 1000 by using examples. It should be understood that the functions of the modules described in the following examples are merely functions that the code generation apparatus 1000 may have in some embodiments of this application, and the functions of the modules are not limited in this application.

The obtaining module 1010 is configured to receive a code generation request that carries a first question and is sent by a terminal device 100.

The question decomposition module 1020 is configured to decompose the first question to obtain a step of resolving the first question.

The knowledge search module 1030 is configured to search a code knowledge base based on each step in the step of resolving the first question, to obtain target code knowledge, where the target code knowledge includes code knowledge that is in the code knowledge base and that matches each step in the step of resolving the first question.

The code generation module 1040 is configured to: input the step of resolving the first question and the target code knowledge into a code generation model, and use code output by the code generation model as target code, where the code generation model is obtained by training, using an AI technology, steps of resolving a plurality of known questions, code knowledge matching the steps of resolving the plurality of known questions, and code used to resolve the plurality of known questions, and code used to resolve each known question includes code in code knowledge matching a step of resolving each known question.

The sending module 1050 is configured to send the target code to the terminal device 100.

In some possible embodiments, the code knowledge base includes a language type to which each piece of code knowledge in the code knowledge base belongs; the obtaining module 1010 is further configured to obtain an expected code language type of a first user, where the first user is a user of the terminal device; and the knowledge search module 1030 is specifically configured to search the code knowledge base based on each step in the step of resolving the first question and the expected code language type, to obtain the target code knowledge, where the target code knowledge includes the code knowledge that is in the code knowledge base, belongs to a same language type as the expected code language type, and matches each step in the step of resolving the first question.

In some possible embodiments, the obtaining module 1010 is further configured to: obtain information about the first user, query a first correspondence based on the information about the first user, and use, as a target prompt template, a prompt template that corresponds to the information about the first user and that is in a plurality of prompt templates, where the first correspondence indicates a correspondence between a plurality of pieces of user information and the plurality of prompt templates, the first user is the user of the terminal device, and the first user belongs to a plurality of users; and the code generation module 1040 is specifically configured to: fill the step of resolving the first question and the target code knowledge into the target prompt template; and input the target prompt template into the code generation model.

In some possible embodiments, the apparatus 1000 further includes a knowledge update module 1060 (not shown in FIG. 10); the obtaining module 1010 is further configured to receive an update request that is for the code knowledge base and that is sent by the terminal device 100; and the knowledge update module 1060 is configured to update the code knowledge base based on the update request.

In some possible embodiments, the update request carries new code knowledge; and the knowledge update module 1060 is configured to add the new code knowledge carried in the update request to the code knowledge base.

In some possible embodiments, the language type to which the code knowledge in the code knowledge base belongs includes any one or more of the following: C, C++, C#, Java, Python, JavaScript, Visual Basic, and Golang..

In some possible embodiments, an IDE is installed on the terminal device 100, and the code generation request is generated based on the first question after the IDE on the terminal device 100 receives the first question, and is sent to the obtaining module 1010.

In some possible embodiments, the apparatus 1000 may further include a first model training module 1070 and a second model training module 1080 (neither is shown in FIG. 10). The first model training module 1070 is configured to perform training to obtain the question step decomposition model, and the second model training module 1080 is configured to perform training to obtain the code generation model.

During specific implementation, the obtaining module 1010, the question decomposition module 1020, the knowledge search module 1030, the code generation module 1040, the sending module 1050, the knowledge update module 1060, the first model training module 1070, and the second model training module 1080 may all be implemented by using software, or may be implemented by using hardware. For example, the following uses the code generation module 1040 as an example to describe an implementation of the code generation module 1040. Similarly, for implementations of the obtaining module 1010, the question decomposition module 1020, the knowledge search module 1030, the sending module 1050, the knowledge update module 1060, the first model training module 1070, and the second model training module 1080, refer to the implementation of the code generation module 1040.

A module is used as an example of a software functional unit, and the code generation module 1040 may include code that is run on a compute instance. The compute instance may include at least one of a physical host (compute device), a virtual machine, and a container. Further, there may be one or more compute instances. For example, the code generation module 1040 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

A module is used as an example of a hardware functional unit, and the code generation module 1040 may include at least one compute device, for example, a server. Alternatively, the code generation module 1040 may be a device implemented by an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

When the code generation module 1040 includes a plurality of compute devices, the plurality of included compute devices may be distributed in a same region, or may be distributed in different regions. The plurality of compute devices included in the code generation module 1040 may be distributed in a same AZ, or may be distributed in different AZs. Similarly, the plurality of compute devices included in the code generation module 1040 may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the code generation module 1040 may be configured to perform any step in the code generation methods shown in FIG. 3, FIG. 5, FIG. 6, and FIG. 8, the obtaining module 1010 may be configured to perform any step in the code generation methods shown in FIG. 3, FIG. 5, FIG. 6, and FIG. 8, the knowledge search module 1030 may be configured to perform any step in the code generation methods shown in FIG. 3, FIG. 5, and FIG. 8, the question decomposition module 1020 may be configured to perform any step performed in the code generation methods shown in FIG. 3, FIG. 5, FIG. 6, and FIG. 8, the sending module 1050 may be configured to perform any step performed in the code generation methods shown in FIG. 3, FIG. 5, FIG. 6, and FIG. 8, the knowledge update module 1060 may be configured to perform any step performed in the code generation methods shown in FIG. 3, FIG. 5, FIG. 6, and FIG. 8, the first model training module 1070 may be configured to perform any step performed in the code generation methods shown in FIG. 3, FIG. 5, FIG. 6, and FIG. 8, and the second model training module 1080 may be configured to perform any step performed in the code generation methods shown in FIG. 3, FIG. 5, FIG. 6, and FIG. 8. Steps implemented by the obtaining module 1010, the question decomposition module 1020, the knowledge search module 1030, the code generation module 1040, the sending module 1050, the knowledge update module 1060, the first model training module 1070, and the second model training module 1080 may be specified as required. By using the obtaining module 1010, the question decomposition module 1020, the knowledge search module 1030, the code generation module 1040, the sending module 1050, the knowledge update module 1060, the first model training module 1070, and the second model training module 1080, different steps in the code generation methods shown in FIG. 3, FIG. 5, FIG. 6, and FIG. 8 are separately implemented, to implement all functions of the code generation apparatus 1000.

An embodiment of this application further provides a compute device 1100. The code generation apparatus 1000 shown in FIG. 10 may be deployed in the compute device 1100. Operations and/or functions of modules in the compute device 1100 are respectively used to implement corresponding steps in the code generation methods shown in FIG. 3, FIG. 5, FIG. 6, and FIG. 8.

As shown in FIG. 11, the compute device 1100 includes a processor 1110, a memory 1120, and a communication interface 1130. The processor 1110, the memory 1120, and the communication interface 1130 may be connected to each other through a bus 1140.

The processor 1110 may read program code (including instructions) stored in the memory 1120, and execute the program code stored in the memory 1120, so that the compute device 1100 performs the code generation methods shown in FIG. 3, FIG. 5, FIG. 6, and FIG. 8, or the compute device 1100 deploys the code generation apparatus 1000.

The processor 1110 may have a plurality of specific implementation forms, for example, a CPU or a combination of a CPU and a hardware chip. The hardware chip may be an ASIC, a PLD, or a combination thereof. The PLD may be a CPLD, an FPGA, GAL, or any combination thereof. The processor 1110 executes various types of digital storage instructions, for example, software or firmware programs stored in the memory 1120, to cause the compute device 1100 to provide various services.

The memory 1120 is configured to store program code, and the processor 1110 controls execution of the program code. The program code may include one or more software modules. The one or more software modules may be the software modules provided in the embodiment in FIG. 10, for example, the obtaining module 1010, the question decomposition module 1020, the knowledge search module 1030, the code generation module 1040, and the sending module 1050. Optionally, the one or more software modules may alternatively be the knowledge update module 1060, the first model training module 1070, and the second model training module 1080 (not shown in FIG. 11) provided in the embodiment in FIG. 10.

The memory 1120 may include a volatile memory (volatile memory), for example, a random access memory (random access memory, RAM). The memory 1120 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 1120 may further include a combination of the foregoing types.

The communication interface 1130 may be a wired interface (for example, an Ethernet interface, an optical fiber interface, or an interface of another type (for example, an infiniBand interface)) or a wireless interface (for example, a cellular network interface or a wireless local area network interface), and is used to communicate with another compute device or apparatus. The communication interface 1130 may use a protocol suite above a transmission control protocol/internet protocol (transmission control protocol/internet protocol, TCP/IP), for example, a remote function call (remote function call, RFC) protocol, a simple object access protocol (simple object access protocol, SOAP), a simple network management protocol (simple network management protocol, SNMP), a common object request broker architecture (common object request broker architecture, CORBA) protocol, and a distributed protocol.

The bus 1140 may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. The bus 1140 may be classified into an address bus, a data bus, a control bus, and the like. In addition to a data bus, the bus 1140 may further include a power bus, a control bus, a status signal bus, and the like. However, for clarity of description, various buses are marked as the bus 1140 in the figure. For ease of representation, only one bold line is used to represent the bus in FIG. 11, but this does not mean that there is only one bus or only one type of bus.

The compute device 1100 is configured to perform the code generation methods shown in FIG. 3, FIG. 5, FIG. 6, and FIG. 8. For a specific implementation process of the compute device 1100, refer to the foregoing method embodiments. Details are not described herein again.

It should be understood that the compute device 1100 is merely an example provided in embodiments of this application. In addition, the compute device 1100 may have more or fewer components than those shown in FIG. 11, may combine two or more components, or may have different component configurations.

This application further provides a compute device cluster 1200. The code generation apparatus 1000 shown in FIG. 10 may be deployed in the compute device cluster 1200. Operations and/or functions of modules in the compute device cluster 1200 are respectively used to implement corresponding steps in the code generation methods shown in FIG. 3, FIG. 5, FIG. 6, and FIG. 8.

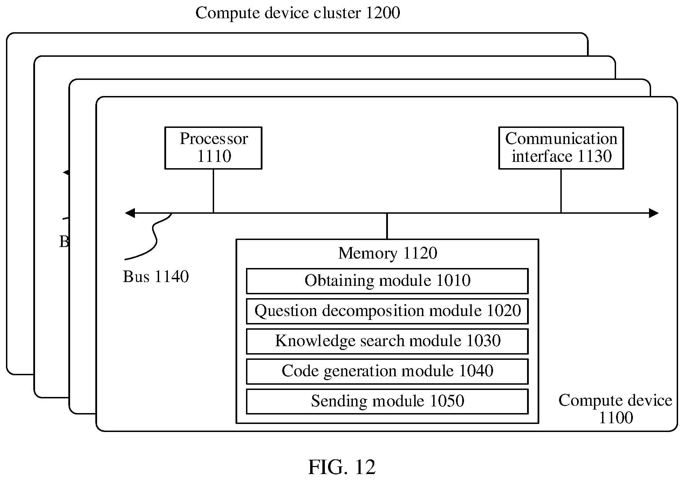

As shown in FIG. 12, the compute device cluster 1200 includes at least one compute device 1100. The memory 1120 in the one or more compute devices 1100 in the compute device cluster may store same instructions used to perform the code generation methods shown in FIG. 3, FIG. 5, FIG. 6, and FIG. 8. The compute device 1100 may be a server, for example, a central server, an edge server, or a local server in a local data center. In some embodiments, the compute device 1100 may alternatively be a terminal device, for example, a desktop computer, a notebook computer, or a smartphone.

In some possible implementations, the memory 1120 in the one or more compute devices 1100 in the compute device cluster 1200 may also separately store some instructions used to perform the code generation methods shown in FIG. 3, FIG. 5, FIG. 6, and FIG. 8. In other words, a combination of the one or more compute devices 1100 may jointly execute the instructions used to perform the code generation methods shown in FIG. 3, FIG. 5, FIG. 6, and FIG. 8.

It should be noted that memories 1120 in different compute devices 1100 in the compute device cluster 1200 may store different instructions, and different instructions are separately used to perform some functions of the code generation apparatus 1000. That is, instructions stored in the memory 1120 in different compute devices 1100 may implement functions of one or more of the obtaining module 1010, the question decomposition module 1020, the knowledge search module 1030, the code generation module 1040, and the sending module 1050.

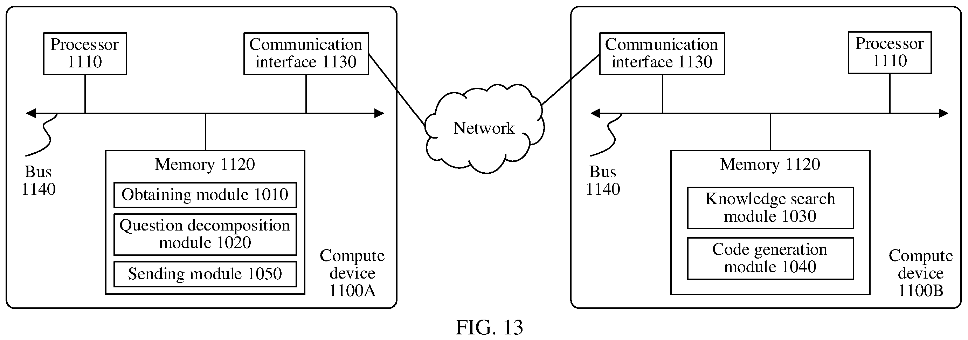

In some possible implementations, the one or more compute devices 1100 in the compute device cluster 1200 may be connected through a network. The network may be a wide area network, a local area network, or the like. FIG. 13 shows a possible implementation. As shown in FIG. 13, two compute devices 1100A and 1100B are connected through a network. Specifically, each compute device is connected to the network through a communication interface in the compute device. In this possible implementation, a memory 1120 in the compute device 1100A stores instructions for executing functions of the obtaining module 1010, the question decomposition module 1020, and the sending module 1050. In addition, a memory 1120 in the compute device 1100B stores instructions for executing functions of the knowledge search module 1030 and the code generation module 1040.

For a manner of connection between compute device clusters 1200 shown in FIG. 13, it may be considered that, in the code generation method provided in embodiments of this application, searching needs to be performed in the code knowledge base based on the step of resolving the large quantity of questions, and code generation needs to be performed based on the large quantity of questions. Therefore, it is considered that functions implemented by the knowledge search module 1030 and the code generation module 1040 are performed by the compute device 1100B.

It should be understood that functions of the compute device 1100A shown in FIG. 13 may alternatively be completed by a plurality of compute devices 1100. Similarly, functions of the compute device 1100B may alternatively be completed by a plurality of compute devices 1100.

This application further provides a computer program product including instructions. The computer program product may be software or a program product that includes the instructions and that can run on a compute device or be stored in any usable medium. When the computer program product runs on at least one compute device, the at least one compute device is caused to perform the code generation methods shown in FIG. 3, FIG. 5, FIG. 6, and FIG. 8.

This application further provides a computer-readable storage medium. The computer-readable storage medium may be any usable medium accessible by a compute device, or a data storage device, like a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive), or the like. The computer-readable storage medium includes instructions, and the instructions instructs a compute device to perform the code generation methods shown in FIG. 3, FIG. 5, FIG. 6, and FIG. 8.

In the foregoing embodiments, the description of each embodiment has respective focuses. For a part that is not described in detail in an embodiment, reference may be made to related descriptions in other embodiments.

All or a part of the foregoing embodiments may be implemented by using software, hardware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium, a semiconductor medium, or the like.

The foregoing descriptions are merely specific implementations of this application. Any variation or replacement readily figured out by a person skilled in the art based on the specific implementations provided in this application shall fall within the protection scope of this application.

## Claims

1. A code generation method, applied to a code generation system, wherein the code generation system comprises a cloud computing platform and a terminal device, and the method comprises:

   receiving, by the cloud computing platform, a code generation request that carries a first question and is sent by the terminal device;
   decomposing, by the cloud computing platform, the first question to obtain a step of resolving the first question;
   searching, by the cloud computing platform, a code knowledge base based on each step in the step of resolving the first question, to obtain target code knowledge, wherein the target code knowledge comprises code knowledge that is in the code knowledge base and that matches each step in the step of resolving the first question;
   inputting, by the cloud computing platform, the step of resolving the first question and the target code knowledge into a code generation model, and using code output by the code generation model as target code, wherein the code generation model is obtained by training, using an artificial intelligence AI technology, steps of resolving a plurality of known questions, code knowledge matching the steps of resolving the plurality of known questions, and code used to resolve the plurality of known questions, and code used to resolve each known question comprises code in code knowledge matching a step of resolving each known question; and
   sending, by the cloud computing platform, the target code to the terminal device.

2. The method according to claim 1, wherein the code knowledge base comprises a language type to which each piece of code knowledge in the code knowledge base belongs;
   the method further comprises:

   obtaining, by the cloud computing platform, an expected code language type of a first user, wherein the first user is a user of the terminal device; and
   the searching, by the cloud computing platform, the code knowledge base based on each step in the step of resolving the first question, to obtain the target code knowledge, wherein the target code knowledge comprises the code knowledge that matches each step in the step of resolving the first question comprises:
   searching, by the cloud computing platform, the code knowledge base based on each step in the step of resolving the first question and the expected code language type, to obtain the target code knowledge, wherein the target code knowledge comprises the code knowledge that is in the code knowledge base, belongs to a same language type as the expected code language type, and matches each step in the step of resolving the first question.

3. The method according to claim 1 or 2, wherein the method further comprises:

obtaining, by the cloud computing platform, information about the first user, querying a first correspondence based on the information about the first user, and using, as a target prompt template, a prompt template that corresponds to the information about the first user and that is in a plurality of prompt templates, wherein the first correspondence indicates a correspondence between a plurality of pieces of user information and the plurality of prompt templates, the first user is the user of the terminal device, and the first user belongs to the plurality of users; and

the inputting, by the cloud computing platform, the step of resolving the first question and the target code knowledge into the code generation model comprises:

> filling, by the cloud computing platform, the step of resolving the first question and the target code knowledge into the target prompt template; and
> inputting, by the cloud computing platform, the target prompt template into the code generation model.

**4.** The method according to any one of claims 1 to 3, wherein the method further comprises:

receiving, by the cloud computing platform, an update request that is for the code knowledge base and that is sent by the terminal device; and
updating, by the cloud computing platform, the code knowledge base based on the update request.

**5.** The method according to claim 4, wherein the update request carries new code knowledge; and
the updating, by the cloud computing platform, the code knowledge base based on the update request comprises:
adding, by the cloud computing platform, the new code knowledge carried in the update request to the code knowledge base.

**6.** The method according to any one of claims 2 to 5, wherein the language type to which the code knowledge in the code knowledge base belongs comprises any one or more of the following: C, C++, C#, Java, Python, JavaScript, Visual Basic, and Golang.

**7.** The method according to any one of claims 1 to 6, wherein an integrated development environment IDE is installed on the terminal device, and the code generation request is generated based on the first question after the IDE on the terminal device receives the first question, and is sent to the cloud computing platform.

**8.** A code generation apparatus, used in a cloud computing platform, wherein the cloud computing platform belongs to a code generation system, the code generation system further comprises a terminal device, and the apparatus comprises:

an obtaining module, configured to receive a code generation request that carries a first question and is sent by the terminal device;
a question decomposition module, configured to decompose the first question to obtain a step of resolving the first question;
a knowledge search module, configured to search a code knowledge base based on each step in the step of resolving the first question, to obtain target code knowledge, wherein the target code knowledge comprises code knowledge that is in the code knowledge base and that matches each step in the step of resolving the first question;
a code generation module, configured to: input the step of resolving the first question and the target code knowledge into a code generation model, and use code output by the code generation model as target code, wherein the code generation model is obtained by training, using an artificial intelligence AI technology, steps of resolving a plurality of known questions, code knowledge matching the steps of resolving the plurality of known questions, and code used to resolve the plurality of known questions, and code used to resolve each known question comprises code in code knowledge matching a step of resolving each known question; and
a sending module, configured to send the target code to the terminal device.

**9.** The apparatus according to claim 8, wherein the code knowledge base comprises a language type to which each piece of code knowledge in the code knowledge base belongs;

the obtaining module is further configured to obtain an expected code language type of a first user, wherein the first user is a user of the terminal device; and
the knowledge search module is configured to search the code knowledge base based on each step in the step of resolving the first question and the expected code language type, to obtain the target code knowledge, wherein the target code knowledge comprises the code knowledge that is in the code knowledge base, belongs to a same language type as the expected code language type, and matches each step in the step of resolving the first question.

10. The apparatus according to claim 8 or 9, wherein

the obtaining module is further configured to: obtain information about the first user, query a first correspondence based on the information about the first user, and use, as a target prompt template, a prompt template that corresponds to the information about the first user and that is in a plurality of prompt templates, wherein the first correspondence indicates a correspondence between a plurality of pieces of user information and the plurality of prompt templates, the first user is the user of the terminal device, and the first user belongs to the plurality of users; and
the code generation module is specifically configured to:

fill the step of resolving the first question and the target code knowledge into the target prompt template; and input the target prompt template into the code generation model.

11. The apparatus according to any one of claims 8 to 10, wherein the apparatus further comprises a knowledge update module;

the obtaining module is further configured to receive an update request that is for the code knowledge base and that is sent by the terminal device; and
the knowledge update module is configured to update the code knowledge base based on the update request.

12. The apparatus according to claim **11,** wherein the update request carries new code knowledge; and
the knowledge update module is configured to add the new code knowledge carried in the update request to the code knowledge base.

13. The apparatus according to any one of claims 8 to 12, wherein the language type to which the code knowledge in the code knowledge base belongs comprises any one or more of the following: C, C++, C#, Java, Python, JavaScript, Visual Basic, and Golang.

14. The apparatus according to any one of claims 8 to 13, wherein an IDE is installed on the terminal device, and the code generation request is generated based on the first question after the IDE on the terminal device receives the first question, and is sent to the obtaining module.

15. A compute device cluster, comprising at least one compute device, wherein each of the at least one compute device comprises a processor and a memory; and
the processor of the at least one compute device is configured to execute instructions stored in the memory of the at least one compute device, to cause the compute device cluster to perform the method according to any one of claims 1 to 7.

16. A computer-readable storage medium, comprising computer program instructions, wherein when the computer program instructions are executed by a compute device cluster, the compute device cluster performs the method according to any one of claims 1 to 7.

FIG. 1

Cloud computing platform 200

Purchase a code generation cloud service

Provide the code generation cloud service

User

Terminal device 100

FIG. 2

| Terminal device 100 | Cloud computing platform 200 |

S301: Receive a first question input by a first user

S302: Generate a code generation request that carries the first question

S303: Send the code generation request ⟶

S304: Decompose the first question carried in the code generation request, to obtain a step of resolving the first question

S305: Search a code knowledge base based on each step in the step of resolving the first question, to obtain target code knowledge, where the target code knowledge includes code knowledge that is in the code knowledge base and that matches each step in the step of resolving the first question

S306: Input the step of resolving the first question and the target code knowledge into a code generation model, and use code output by the code generation model as target code

◀ S307: Send the target code

S308: Display the target code

FIG. 3

FIG. 4A

Second training
sample set

Step of resolving a known question

Known question 1

Known question 2

...

Training

Training

Training

Code knowledge matching the step of
resolving the known question

Code knowledge matching a step of
resolving the known question 1

Code knowledge matching a step of
resolving the known question 2

...

Training

Training

Training

Code used to resolve the known question

Code used to resolve the known
question 1

Code used to resolve the known
question 2

...

Training

Training

Training

Training

Second
AI model

Step of resolving a first
question and code
knowledge matching the step
of resolving the first question

Code generation model
(that is, trained second
AI model)

Code

FIG. 4B

EP 4 787 150 A1

Terminal device 100

Cloud computing platform 200

S501: Receive a first question input by a first user

S502: Obtain an expected code language type of the first user

S503: Generate a code generation request that carries the first question and the expected code language type

S504: Send the code generation request →

S505: Decompose the first question carried in the code generation request, to obtain a step of resolving the first question

S506: Search a code knowledge base based on each step in the step of resolving the first question and the expected code language type, to obtain target code knowledge, where the target code knowledge includes code knowledge that is in code knowledge in the code knowledge base and that belongs to a same language type as the expected code language type and that matches each step in the step of resolving the first question

S507: Input the step of resolving the first question and the target code knowledge into a code generation model, and use code output by the code generation model as target code

← S508: Send the target code

S509: Display the target code

FIG. 5

Terminal device 100

Cloud computing platform 200

S601: Receive a first question input by a first user

S602: Obtain a product line to which the first user belongs

S603: Generate a code generation request that carries the first question and the product line to which the first user belongs

S604: Send the code generation request →

S605: Decompose the first question carried in the code generation request, to obtain a step of resolving the first question

S606: Search a code knowledge base based on each step in the step of resolving the first question and the product line to which the first user belongs, to obtain target code knowledge, where the target code knowledge includes code knowledge that is in code knowledge in the code knowledge base and that belongs to a same product line as the product line to which the first user belongs and that matches each step in the step of resolving the first question

S607: Input the step of resolving the first question and the target code knowledge into a code generation model, and use code output by the code generation model as target code

← S608: Send the target code

S609: Display the target code

FIG. 6

Prompt template

As an expert of {    }, you need to complete the following tasks:          710

Based on the knowledge above, please complete code writing.

FIG. 7

```
┌─────────────────────────────┐        ┌─────────────────────────────┐
│    Terminal device 100      │        │ Cloud computing platform 200│
└─────────────────────────────┘        └─────────────────────────────┘
```

S801: Receive a first question input by a first user

S802: Obtain information about the first user

S803: Generate a code generation request that carries the first question and the information about the first user

S804: Send the code generation request ⟶

S805: Decompose the first question carried in the code generation request, to obtain a step of resolving the first question

S806: Search a code knowledge base based on each step in the step of resolving the first question, to obtain target code knowledge, where the target code knowledge includes code knowledge that is in the code knowledge base and that matches each step in the step of resolving the first question

S807: Query a first correspondence based on the information about the first user carried in the code generation request, and use a prompt template that is in a plurality of prompt templates and that corresponds to the information about the first user as a target prompt template

S808: Fill the step of resolving the first question and the target code knowledge into the target prompt template

S809: Input, into a code generation model, the target prompt template into which the step of resolving the first question and the target code knowledge are filled, and use code output by the code generation model as target code

⟵ S810: Send the target code

S811: Display the target code

FIG. 8

Prompt template

As an expert of { }, you need to complete the
following tasks: 710

S1: Install a crawler software dependency program library--
{code knowledge matching S1}
S2: Configure a keyword search interface--{code knowledge
matching S2}
S3: Configure a crawler interface--{code knowledge
matching S3}
S4: Configure an interface for obtaining paper data from a
paper platform A--{code knowledge matching S4}
S5: Configure an abstract generation function--{code
knowledge matching S5}
S6: Configure a scheduled service interface to crawl a paper
list at fixed time every day--{code knowledge matching S6}

Based on the knowledge above, please complete code
writing.

Prompt template

As an expert of { }, you need to complete 710
the following tasks:

Based on the knowledge above, please
complete code writing.

FIG. 9

Code generation apparatus 1000

1010

Sending module 1050

1040

Obtaining module

1020

1030

Code generation module

Question decomposition module

Knowledge search module

FIG. 10

Processor 1110

Communication interface 1130

Bus 1140

Memory 1120

Obtaining module 1010

Question decomposition module 1020

Knowledge search module 1030

Code generation module 1040

Sending module 1050

Compute device 1100

FIG. 11

Compute device cluster 1200

| | Processor 1110 | | Communication interface 1130 |

B

Bus 1140

Memory 1120

Obtaining module 1010

Question decomposition module 1020

Knowledge search module 1030

Code generation module 1040

Sending module 1050

Compute device 1100

FIG. 12

FIG. 13

# EP 4 787 150 A1

## INTERNATIONAL SEARCH REPORT

| | International application No. |
|---|---|
| | **PCT/CN2024/108284** |

### A. CLASSIFICATION OF SUBJECT MATTER

G06F 8/41(2018.01)i

According to International Patent Classification (IPC) or to both national classification and IPC

### B. FIELDS SEARCHED

Minimum documentation searched (classification system followed by classification symbols)

IPC:G06F8/-

Documentation searched other than minimum documentation to the extent that such documents are included in the fields searched

Electronic data base consulted during the international search (name of data base and, where practicable, search terms used)

CJFD, CNABS, CNTXT, ENTXT, VEN, CNKI, IEEE: 代码, 编程, 程序, 自动, 生成, 云计算, 终端, 用户, 问题, 需求, 分解, 拆解, 解析, 步骤, 提示, 人工智能, 机器学习, AI, 代码库, 代码数据库, 匹配, prompt, 语言, 类型, user, cloud, service, code? , programming, demand, analy+, auto+, generat+, library, database, match, artificial intelligence, model

### C. DOCUMENTS CONSIDERED TO BE RELEVANT

| Category* | Citation of document, with indication, where appropriate, of the relevant passages | Relevant to claim No. |
|---|---|---|
| Y | CN 116820429 A (TENCENT TECHNOLOGY (SHENZHEN) CO., LTD.) 29 September 2023 (2023-09-29) description, paragraphs 12-172 | 1-16 |
| Y | CN 116719520 A (ALIPAY (HANGZHOU) INFORMATION TECHNOLOGY CO., LTD.) 08 September 2023 (2023-09-08) description, paragraphs 14-70 | 1-16 |
| A | CN 114924721 A (PING AN BANK CO., LTD.) 19 August 2022 (2022-08-19) entire document | 1-16 |
| A | CN 115048102 A (ALIBABA (CHINA) CO., LTD. et al.) 13 September 2022 (2022-09-13) entire document | 1-16 |
| A | CN 116841506 A (BEIJING BAIDU NETCOM SCIENCE AND TECHNOLOGY CO., LTD.) 03 October 2023 (2023-10-03) entire document | 1-16 |

☑ Further documents are listed in the continuation of Box C.    ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | "&" | document member of the same patent family |
| "P" | document published prior to the international filing date but later than the priority date claimed | | | |

| Date of the actual completion of the international search | Date of mailing of the international search report |
|---|---|
| **24 September 2024** | **27 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/108284**

| C. | DOCUMENTS CONSIDERED TO BE RELEVANT | |
|---|---|---|
| Category* | Citation of document, with indication, where appropriate, of the relevant passages | Relevant to claim No. |
| A | US 2023273776 A1 (HUAWEI CLOUD COMPUTING TECHNOLOGY CO., LTD.) 31 August 2023 (2023-08-31)<br>entire document | 1-16 |

Form PCT/ISA/210 (second sheet) (July 2022)

INTERNATIONAL SEARCH REPORT
Information on patent family members

International application No.

**PCT/CN2024/108284**

| Patent document cited in search report | | | Publication date (day/month/year) | Patent family member(s) | | | Publication date (day/month/year) |
|---|---|---|---|---|---|---|---|
| CN | 116820429 | A | 29 September 2023 | CN | 116820429 | B | 17 November 2023 |
| CN | 116719520 | A | 08 September 2023 | CN | 116719520 | B | 17 November 2023 |
| CN | 114924721 | A | 19 August 2022 | | None | | |
| CN | 115048102 | A | 13 September 2022 | | None | | |
| CN | 116841506 | A | 03 October 2023 | CN | 116841506 | B | 03 May 2024 |
| US | 2023273776 | A1 | 31 August 2023 | EP | 4220381 | A1 | 02 August 2023 |
| | | | | EP | 4220381 | A4 | 03 April 2024 |
| | | | | WO | 2022089188 | A1 | 05 May 2022 |
| | | | | CN | 116406459 | A | 07 July 2023 |

Form PCT/ISA/210 (patent family annex) (July 2022)

**EP 4 787 150 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311377535
- CN 202311535400